# EUROPÄISCHE PATENTANMELDUNG

(11) **EP 2 840 355 A1**
(43) Veröffentlichungstag der Anmeldung: **25.02.2015**
(21) Anmeldenummer: 13181172.1
(22) Anmeldetag: 21.08.2013
(51) Int. Cl.: G01C 15/00, G01B 3/56

(54) **Lasergerät und Haltevorrichtung zur Befestigung eines Lasergerätes an einem Halteelement**

(71) Anmelder: HILTI Aktiengesellschaft, 9494 Schaan (LI)
(72) Erfinder: Senger, Alexander, 9470 Buchs (CH)
(74) Vertreter: Hilti Aktiengesellschaft Corporate Intellectual Property

(57) **Zusammenfassung**

Ein Lasergerät 101 hat ein Gerätegehäuse 116, eine Messeinrichtung 117, die zumindest teilweise innerhalb des Gerätegehäuses 116 angeordnet ist, und eine mit dem Gerätegehäuse 116 verbundene, erste Verbindungseinrichtung 106 zur Verbindung des Lasergerätes 101 mit einer Haltevorrichtung 102. Die erste Verbindungseinrichtung 106 hat ein erstes magnetisches Verbindungselement 127, 128 und ein erstes Steckelement 129.

## Beschreibung

### Technisches Gebiet

Die vorliegende Erfindung betrifft ein Lasergerät gemäß dem Oberbegriff des Anspruchs 1, eine Haltevorrichtung zur Befestigung eines Lasergerätes an einem Halteelement gemäß dem Oberbegriff des Anspruchs 10 sowie ein Gerätesystem bestehend aus einem Lasergerät und einer Haltevorrichtung gemäß dem Oberbegriff des Anspruchs 16.

Unter dem Begriff "Lasergerät" werden im Rahmen der vorliegenden Erfindung alle Geräte zusammengefasst, die eine Messeinrichtung mit optischen oder elektro-optischen Komponenten einsetzen. Beispiele für Lasergeräte sind Laserempfänger, Laserdistanzmessgeräte, Punkt- und/oder Linienlasergeräte sowie Rotationslasergeräte.

### Stand der Technik

Die Robustheit von Lasergeräten gegenüber Stürzen konnte durch den Einsatz neuer Werkstoffe, durch Kombination verschiedener Werkstoffe sowie durch konstruktive Maßnahmen verbessert werden. Um Laserstrahlen auf einen Zielpunkt oder einen Zielbereich auszurichten, ist es häufig erforderlich, das Lasergerät an einem Halteelement zu befestigen. Bei den Halteelementen wird zwischen Stativen, mobilen Halteelementen und feststehenden Halteelementen unterschieden. Mobile Halteelemente werden vom Bediener in der Hand gehalten und können im Raum bewegt werden. Beispiele für mobile Halteelemente sind Messlatten, Nivellierlatten, Lotstöcke und Teleskopstangen. Feststehende Halteelemente sind Elemente in der Messumgebung, die eine andere Funktion innehaben und vom Bediener als Halteelemente genutzt werden. Beispiele für feststehende Halteelemente sind Wandschienen, Tür- oder Fensterrahmen und Rohre. Als nachteilig für die Robustheit der Lasergeräte haben sich Haltevorrichtungen erwiesen, mit denen die Lasergeräte an einem Stativ oder einem mobilen Halteelement befestigt werden.

Aus DE 10 2007 007 041 B3 ist ein Stativ mit drei Stativbeinen bekannt, das durch Verdrehen der Stativbeine in eine Haltevorrichtung zur Befestigung eines Lasergerätes an einem rohrförmigen Halteelement verwandelt werden kann. Die Haltevorrichtung umfasst ein Grundelement, eine Befestigungseinrichtung zur Befestigung der Haltevorrichtung am Halteelement und eine Verbindungseinrichtung zur Verbindung der Haltevorrichtung mit dem Lasergerät. Die Stativbeine sind um eine Drehachse drehbar ausgebildet und lassen sich in ein winkelförmiges Grundelement verwandeln, wobei ein Stativbein vertikal und zwei Stativbeine horizontal ausgerichtet sind. Die Befestigungseinrichtung umfasst einen Adapter mit einer V-förmigen Anlagefläche und ein Befestigungsband, der Adapter wird über die V-förmige Anlagefläche an dem rohrförmigen Halteelement positioniert und mittels des Befestigungsbandes am Halteelement befestigt. Da der Adapter nur für die Befestigung an einem rohrförmigen Halteelement benötigt wird, ist die Verbindung zwischen dem Adapter und den Stativbeinen lösbar als Magnetverbindung ausgebildet. Das vertikal ausgerichtete Stativbein umfasst mindestens einen Dauermagneten, der im verbundenen Zustand einem ferromagnetischen Bereich des Adapters gegenüber liegt. Zur Verbindung der Haltevorrichtung mit einem Lasergerät ist am oberen der horizontal ausgerichteten Stativbeine ein Gewindebolzen vorgesehen, der mit einer Gewindebohrung an der Unterseite des Lasergerätes eine Schraubverbindung bildet.

Die Robustheit des Lasergerätes ist durch die Haltevorrichtung reduziert. Bei einem Sturz wird zwar die Magnetverbindung zwischen dem Adapter und dem winkelförmigen Grundelement gelöst, allerdings wird eine Kraft, die auf das hervorstehende Winkelelement einwirkt, über die Schraubverbindung auf das Gerätegehäuse des Lasergerätes übertragen. Die Praxis zeigt, dass bei einem Sturz im Bereich der Schraubverbindung Risse oder sonstige Beschädigungen am Gerätegehäuse auftreten.

US 7,310,886 B offenbart ein bekanntes Gerätesystem bestehend aus einem Lasergerät und einer Haltevorrichtung zur Befestigung des Lasergerätes an einem magnetischen Halteelement. Das Lasergerät umfasst ein Gerätegehäuse, eine Messeinrichtung, die zumindest teilweise innerhalb des Gerätegehäuses angeordnet ist, und eine erste Verbindungseinrichtung zur Verbindung des Lasergerätes mit der Haltevorrichtung. Die Haltevorrichtung umfasst ein L-förmiges Grundelement, eine Befestigungseinrichtung zur Befestigung der Haltevorrichtung am Halteelement und eine zweite Verbindungseinrichtung zur Verbindung der Haltevorrichtung mit dem Lasergerät. Die erste und zweite Verbindungseinrichtung sind als Gewindebohrung und Gewindebolzen ausgebildet, die im verbundenen Zustand eine Schraubverbindung bilden. Alternativ ist das Grundelement dauerhaft mit dem Gerätegehäuse des Lasergerätes verbunden. Die Befestigungseinrichtung umfasst mindestens einen Magnet, bevorzugt zwei Magnete, die im Grundelement angeordnet sind.

Die Robustheit des Lasergerätes bei einem Sturz ist durch die Haltevorrichtung reduziert. Bei einem Sturz wird die Magnetverbindung zwischen der Haltevorrichtung und dem Halteelement gelöst, allerdings wird eine Kraft, die auf das L-förmige Grundelement einwirkt, über die Schraubverbindung auf das Gerätegehäuse des Lasergerätes übertragen. Im Bereich der Schraubverbindung können sich Risse oder sonstige Beschädigungen bilden.

### Darstellung der Erfindung

Die Aufgabe der vorliegenden Erfindung besteht darin, ein Lasergerät und eine Haltevorrichtung zum Befestigen des Lasergerätes an einem Halteelement dahingehend zu verbessern, dass das Risiko einer Beschädigung des Lasergerätes bei einem Sturz reduziert ist.

Diese Aufgabe wird bei dem eingangs genannten Lasergerät erfindungsgemäß durch die Merkmale des Anspruchs 1 gelöst, bei der eingangs genannten Haltevorrichtung durch die Merkmale des Anspruchs 10 und bei dem eingangs genannten Gerätesystem durch die Merkmale des Anspruchs 16. Vorteilhafte Weiterbildungen sind in den abhängigen Ansprüchen angegeben.

Erfindungsgemäß ist bei dem Lasergerät vorgesehen, dass die erste Verbindungseinrichtung ein erstes magnetisches Verbindungselement und ein erstes Steckelement aufweist. Das erste magnetische Verbindungselement bildet mit einem zweiten magnetischen Verbindungselement einer Haltevorrichtung eine Magnetverbindung und das erste Steckelement bildet mit einem komplementär ausgebildeten, zweiten Steckelement der Haltevorrichtung eine Steckverbindung. Die Steckverbindung sorgt dafür, dass das Lasergerät und die Haltevorrichtung im verbundenen Zustand in einer definierten Position zueinander ausgerichtet sind, über die Magnetverbindung wird das Lasergerät lösbar mit der Haltevorrichtung verbunden. Dabei wird die Stärke der Magnetverbindung so eingestellt, dass das Lasergerät unter normalen Betriebsbedingungen sicher an einem Halteelement befestigt ist, die Magnetverbindung bei einer starken Krafteinwirkung auf das Lasergerät aber gelöst wird.

Eine Steckverbindung ist eine formschlüssige Verbindung zwischen einem ersten und zweiten Steckelement, wobei die Steckelemente entlang einer Steckrichtung geführt werden und in einer Ebene senkrecht zur Steckrichtung eine formschlüssige Verbindung bilden. Die Steckelemente sind als zylinderförmiger Stecker mit einer beliebigen Querschnittsfläche und als komplementäre Steckbuchse ausgebildet; die Steckrichtung verläuft parallel zur Zylinderachse der Steckelemente. Eine Magnetverbindung ist eine kraftschlüssige Verbindung zwischen einem ersten und zweiten magnetischen Verbindungselement. Dabei kann die Magnetverbindung zwischen zwei Permanentmagneten oder zwischen einem Permanentmagnet und einem Haftelement aus einem ferromagnetischen Material oder einem ferrimagnetischen Material aufgebaut werden.

Wird ein Material einem Magnetfeld ausgesetzt, kommt es zu einer Magnetisierung. Durch die Magnetisierung entsteht im Material ein zusätzliches magnetisches Feld, das sich mit dem äußeren Magnetfeld überlagert. Dabei werden Materialien mit diamagnetischen, paramagnetischen und ferromagnetischen Eigenschaften unterschieden. In diamagnetischen Materialien ist die Magnetisierung dem äußeren Magnetfeld entgegengerichtet und in paramagnetischen Materialen ist die Magnetisierung dem äußeren Magnetfeld gleichgerichtet. In ferromagnetischen Materialien ist die Magnetisierung dem äußeren Magnetfeld ebenfalls gleichgerichtet, aber aufgrund einer besonderen Wechselwirkung, der Austauschwechselwirkung, sehr viel stabiler als in paramagnetischen Materialien. Ferrimagnetische Materialien verhalten sich wie schwächere ferromagnetische Materialien und entstehen durch Überlagerung zweier ferromagnetischer Materialien mit unterschiedlicher Ausrichtung, wobei sich die magnetischen Eigenschaften nicht vollständig kompensieren.

Bevorzugt ist das erste Steckelement als Steckbuchse ausgebildet, die in das Gerätegehäuse des Lasergerätes integriert ist. Das erste Steckelement als Steckbuchse auszubilden, ist vor allem für Lasergeräte vorteilhaft, die auch ohne eine Haltevorrichtung eingesetzt werden. Wenn die Steckbuchse in das Gerätegehäuse integriert ist, steht das erste Steckelement nicht aus dem Gerätegehäuse hervor und behindert den Bediener nicht beim Arbeiten mit dem Lasergerät.

In einer ersten bevorzugten Ausführungsform ist das erste magnetische Verbindungselement als Permanentmagnet ausgebildet oder umfasst einen Permanentmagneten. Der Permanentmagnet bildet mit einem zweiten magnetischen Verbindungselement einer Haltevorrichtung eine Magnetverbindung, wobei das zweite magnetische Verbindungselement als Permanentmagnet oder als ferromagnetisches oder ferrimagnetisches Haftelement ausgebildet ist. Als Materialien für den Permanentmagneten können Neodym-Werkstoffe oder Ferrit-Werkstoffe eingesetzt werden. Neodym-Magnete haben gegenüber Ferrit-Magneten den Vorteil einer höheren Haftkraft pro Volumen oder bei einer gegebenen Haftkraft durch das geringere Volumen einen geringeren Platzbedarf. Ferrit-Magnete sind kostengünstig, weisen eine Temperaturbeständigkeit bis ca. 250° auf und sind rostbeständig. Wenn wenig Volumen zur Verfügung steht und/oder das Lasergerät möglichst leicht sein soll, eignen sich Neodym-Magnete.

Der Permanentmagnet ist besonders bevorzugt als zylinderförmiger Permanentmagnet oder kugelförmiger Permanentmagnet ausgebildet, wobei die Pole des Permanentmagneten parallel zur Steckrichtung des ersten Steckelementes angeordnet sind. Zylinderförmige Permanentmagnete sind in Form eines Zylinders mit einer beliebigen Querschnittsfläche und einer Höhe ausgebildet. Beispiele für zylinderförmige Permanentmagnete sind Quader oder Würfel, die eine quadratische Grundfläche aufweisen, und Scheiben oder Stäbe, die eine kreisförmige Grundfläche aufweisen. Der Permanentmagnet kann auch als Hufeisenmagnet ausgebildet sein, der einen gebogenen Stabmagnet darstellt. Die Form des Permanentmagneten wird an die Gegebenheiten des Lasergerätes und den verfügbaren Raum angepasst.

Bei einem zylinderförmigen Permanentmagneten sind die Pole auf der Grund- und Deckfläche des Zylinders angeordnet und der Permanentmagnet ist durch die Höhe magnetisiert (axiale Magnetisierung); bei einem kugelförmigen Permanentmagneten sind die Pole einander gegenüber liegend angeordnet. Die Anordnung der Pole des Permanentmagneten parallel zur Steckrichtung hat den Vorteil, dass sich die Haftkraft zwischen den magnetischen Verbindungselementen mit dem Abstand verändert und dann am größten ist, wenn der Abstand so klein wie möglich ist. Der Aufbau der Magnetverbindung ermöglicht es, das Lasergerät in einer definierten Position mit einer Haltevorrichtung zu verbinden. Die Magnetverbindung weist ein Kraftmaximum bei geschlossener Steckverbindung auf und fixiert das Lasergerät und die Haltevorrichtung in der gewünschten Position.

Besonders bevorzugt weist das erste magnetische Verbindungselement zusätzlich ein ferromagnetisches oder ferrimagnetisches Element auf. Das ferromagnetische oder ferrimagnetische Element umgibt den Permanentmagneten und verändert das magnetische Feld des Permanentmagneten. Dabei wird das ferromagnetische oder ferrimagnetische Element so angeordnet, dass die magnetischen Feldlinien zum zweiten magnetischen Verbindungselement gerichtet sind und die Haftkraft verstärkt wird. Ein Beispiel ist ein axial magnetisierter Scheibenmagnet, der von einem Stahltopf umgeben ist, wobei der Scheibenmagnet im Kontaktbereich zum Haftelement nicht abgeschirmt ist.

In einer zweiten bevorzugten Ausführungsform ist das erste magnetische Verbindungselement als ferromagnetisches oder ferrimagnetisches Haftelement ausgebildet. Das Haftelement bildet mit einem zweiten magnetischen Verbindungselement einer Haltevorrichtung eine Magnetverbindung, wobei das zweite magnetische Verbindungselement als Permanentmagnet ausgebildet ist oder einen Permanentmagneten umfasst.

Besonders bevorzugt weist die erste Verbindungseinrichtung zwei erste magnetische Verbindungselemente und/oder zwei erste Steckelemente auf. Eine erste Verbindungseinrichtung mit zwei ersten magnetischen Verbindungselementen hat den Vorteil, dass die Anordnung der magnetischen Verbindungselemente bezüglich des Geräteschwerpunktes optimiert werden kann. Um sicherzustellen, dass das Lasergerät nur in der gewünschten Ausrichtung mit einer Haltevorrichtung verbunden werden kann, können die beiden ersten Steckelemente unterschiedlich groß ausgebildet sein oder sie können unterschiedliche Querschnittsformen aufweisen.

In einer bevorzugten Variante ist das Gerätegehäuse des Lasergerätes zweiteilig aus einem Grundgehäuse und einem Schutzgehäuse, das das Grundgehäuse umgibt, ausgebildet, wobei die erste Verbindungseinrichtung im Schutzgehäuse angeordnet ist. Die zweiteilige Ausbildung des Gerätegehäuses aus einem Grundgehäuse und einem Schutzgehäuse hat den Vorteil, dass die erste Verbindungseinrichtung, die zur Verbindung des Lasergerätes mit einer Haltevorrichtung notwendig ist, an herkömmlichen Lasergeräten nachgerüstet werden kann. Außerdem kann das Schutzgehäuse im Hinblick auf eine hohe Robustheit gegenüber Stürzen optimiert werden. Das Schutzgehäuse kann vorstehende Stoßfangelemente aufweisen, die bevorzugt an den Übergängen der Gehäuseflächen des Schutzgehäuses in Form von Kanten oder Ecken ausgebildet sind. Das Schutzgehäuse wird so ausgebildet, dass das Lasergerät auch ohne Haltevorrichtung mit dem Schutzgehäuse eingesetzt werden kann. Lasergeräte, die sich für einen zweiteiligen Aufbau des Gerätegehäuses eignen, sind Laserempfänger und Laserdistanzmessgeräte.

In einer alternativen Variante ist das Gerätegehäuse des Lasergerätes einteilig ausgebildet. Die einteilige Ausbildung des Gerätegehäuses hat den Vorteil, dass weniger Komponenten erforderlich sind und die Verbindung zwischen dem Lasergerät und der Haltevorrichtung einfacher ausgebildet ist.

Erfindungsgemäß ist bei der Haltevorrichtung zur Befestigung eines Lasergerätes vorgesehen, dass die zweite Verbindungseinrichtung ein zweites magnetisches Verbindungselement und ein zweites Steckelement aufweist. Das zweite magnetische Verbindungselement bildet mit einem ersten magnetischen Verbindungselement eines Lasergerätes eine Magnetverbindung und das zweite Steckelement bildet mit einem komplementär ausgebildeten, ersten Steckelement des Lasergerätes eine Steckverbindung.

Bevorzugt ist das zweite Steckelement der zweiten Verbindungseinrichtung als Stecker ausgebildet. Das zweite Steckelemente der Haltevorrichtung als Stecker und das erste Steckelement des Lasergerätes als komplementäre Steckbuchse auszubilden, ist für Lasergeräte vorteilhaft, die auch ohne Haltevorrichtung eingesetzt werden. Die Haltevorrichtung wird nur gemeinsam mit einem verbundenen Lasergerät eingesetzt, so dass vorstehende Stecker an der Haltevorrichtung nicht stören.

In einer ersten bevorzugten Ausführungsform ist das zweite magnetische Verbindungselement als ferromagnetisches oder ferrimagnetisches Haftelement ausgebildet. Das Haftelement bildet mit einem ersten magnetischen Verbindungselement eines Lasergerätes eine Magnetverbindung, wobei das erste magnetische Verbindungselement als Permanentmagnet ausgebildet ist oder zumindest einen Permanentmagneten umfasst.

In einer zweiten bevorzugten Ausführungsform ist das zweite magnetische Verbindungselement als Permanentmagnet ausgebildet oder umfasst einen Permanentmagneten. Der Permanentmagnet bildet mit einem ersten magnetischen Verbindungselement eines Lasergerätes eine Magnetverbindung, wobei das erste magnetische Verbindungselement als Permanentmagnet oder als ferromagnetisches oder ferrimagnetisches Haftelement ausgebildet ist.

Besonders bevorzugt weist das zweite magnetische Verbindungselement zusätzlich ein ferromagnetisches oder ferrimagnetisches Element auf. Das ferromagnetische oder ferrimagnetische Element umgibt den Permanentmagneten und verändert das magnetische Feld des Permanentmagneten. Durch das zusätzliche Element kann die Haftkraft des Permanentmagneten verstärkt werden.

Bevorzugt weist die zweite Verbindungseinrichtung zwei zweite magnetische Verbindungselemente und/oder zwei zweite Steckelemente auf. Eine zweite Verbindungseinrichtung mit zwei zweiten magnetischen Verbindungselementen hat den Vorteil, dass die Anordnung der magnetischen Verbindungselemente bezüglich des Geräteschwerpunktes optimiert werden kann. Bei einer zweiten Verbindungseinrichtung mit zwei Steckelementen können die beiden Steckelemente unterschiedlich groß ausgebildet sein oder unterschiedliche Querschnittsformen aufweisen, um die Haltevorrichtung in der gewünschten Ausrichtung mit einem Lasergerät zu verbinden.

Erfindungsgemäß ist bei dem Gerätesystem vorgesehen, dass die erste Verbindungseinrichtung ein erstes magnetisches Verbindungselement und ein erstes Steckelement aufweist und die zweite Verbindungseinrichtung ein zweites magnetisches Verbindungselement und ein zweites Steckelement aufweist, wobei im verbundenen Zustand des Lasergerätes und der Haltevorrichtung das erste und zweite Steckelement eine Steckverbindung und das erste und zweite magnetische Verbindungselement eine Magnetverbindung bilden. Das Lasergerät wird über die kombinierte Steck- und Magnetverbindung lösbar mit der Haltevorrichtung verbunden. Die Steckverbindung bildet einen Formschluss und sorgt für eine definierte Ausrichtung des Lasergerätes zur Haltevorrichtung. Die Stärke der Magnetverbindung wird so eingestellt, dass das Lasergerät unter normalen Betriebsbedingungen sicher an einem Halteelement befestigt ist und bei Überschreiten einer äußeren Kraft auf das Lasergerät die Magnetverbindung gelöst wird. Dadurch, dass sich die Magnetverbindung bei Überschreiten eines kritischen Grenzwertes durch eine äußere Krafteinwirkung löst, wird die Robustheit des Lasergerätes gegenüber Stürzen erhöht.

Die kombinierte Steck- und Magnetverbindung des erfindungsgemäßen Gerätesystems lässt sich bevorzugt bei Lasergeräten einsetzen, deren Gerätegehäuse durch den Einsatz neuer Werkstoffe, durch Kombination verschiedener Werkstoffe oder durch konstruktive Maßnahmen eine hohe Robustheit aufweisen. Die kritische Verbindung zwischen dem Lasergerät und der Haltevorrichtung wird beim Sturz geöffnet und das elastisch verformbare Gerätegehäuse baut Stoßenergie ab und kehrt anschließend in die unverformte Gestalt zurück.

Bevorzugt liegt das Kraftmaximum der Magnetverbindung zwischen den magnetischen Verbindungselementen vor, wenn die Steckverbindung zwischen den Steckelementen geschlossen ist. Die magnetischen Verbindungselemente der ersten und zweiten Verbindungseinrichtung sind so angeordnet, dass das Kraftmaximum bei geschlossener Steckverbindung vorliegt. Diese Anordnung hat den Vorteil, dass das Lasergerät und die Haltevorrichtung über die magnetischen Verbindungselemente in einer genau definierten Position fixiert werden. Über die Magnetkraft werden das Lasergerät und die Haltevorrichtung in die gewünschte Position bei geschlossener Steckverbindung gezogen.

Besonders bevorzugt verbinden die erste und zweite Verbindungseinrichtung bei geschlossener Steckverbindung eine erste Kontaktfläche des Lasergerätes mit einer zweiten Kontaktfläche der Haltevorrichtung. Dadurch, dass bei geschlossener Steckverbindung eine erste Kontaktfläche des Lasergerätes an einer zweiten Kontaktfläche der Haltevorrichtung anschlägt, ist der verbundene Zustand zwischen dem Lasergerät und der Haltevorrichtung genau definiert. Die Magnetverbindung, die ihr Kraftmaximum bei geschlossener Steckverbindung aufweist, fixiert das Lasergerät und die Haltevorrichtung im Anschlag der Kontaktflächen. Die Kontaktflächen verhindern, dass die Magnetkraft das Lasergerät und die Haltevorrichtung stärker zueinander ziehen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine erste Ausführungsform eines erfindungsgemäßen Gerätesystems mit einem Laserempfänger und einer Haltevorrichtung zur Befestigung des Laserempfängers an einer Messlatte;
- FIG. 2: eine zweite Ausführungsform eines erfindungsgemäßen Gerätesystems mit einem Laserempfänger und einer Haltevorrichtung zur Befestigung des Laserempfängers an einem Halteelement;
- FIG. 3: eine dritte Ausführungsform eines erfindungsgemäßen Gerätesystems mit einem Laserdistanzmessgerät und einer als Stativadapter ausgebildeten Haltevorrichtung zur Befestigung des Laserdistanzmessgerätes an einem Stativ;
- FIGN. 4A, B: den Stativadapter (FIG. 4A) und das Laserdistanzmessgerät (FIG. 4B) der FIG. 3 im Detail;
- FIGN. 5A, B: eine vierte Ausführungsform eines erfindungsgemäßen Gerätesystems mit einem selbstnivellierenden Punktlasergerät und einer Haltevorrichtung zur Befestigung des Punktlasergerätes an einem Halteelement;
- FIG. 6: eine fünfte Ausführungsform eines erfindungsgemäßen Gerätesystems mit einem Rotationslasergerät und einer Haltevorrichtung zur Befestigung des Rotationslasergerätes an einem Stativ; und
- FIGN. 7A-C: verschiedene Varianten einer Steck- und Magnetverbindung.

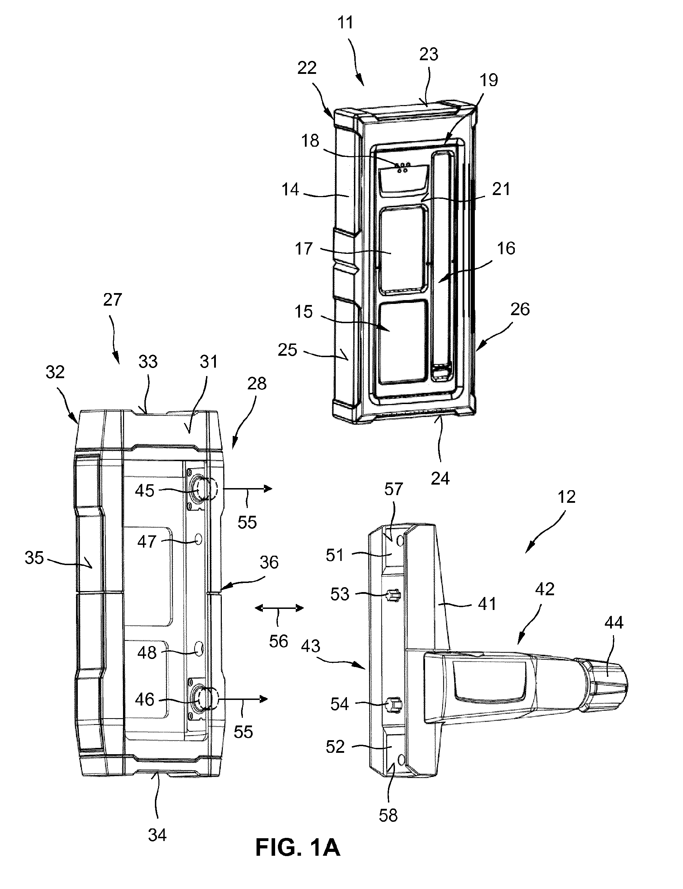

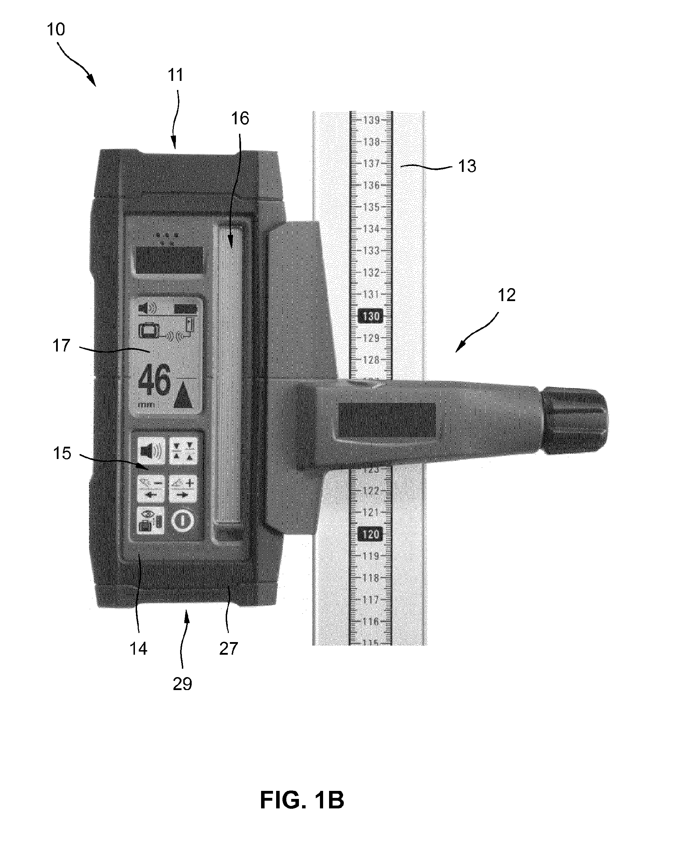

**FIGN. 1A****, B** zeigen eine erste Ausführungsform eines erfindungsgemäßen Gerätesystems **10** bestehend aus einem, als Laserempfänger **11** ausgebildeten, erfindungsgemäßen Lasergerät und einer erfindungsgemäßen Haltevorrichtung **12** zur Befestigung des Laserempfängers 11 an einem länglichen Halteelement, das als Messlatte **13** ausgebildet ist. Dabei zeigt FIG. 1A den Laserempfänger 11 und die Haltevorrichtung 12 im unverbundenen Zustand und FIG. 1B zeigt den Laserempfänger 11, der mittels der Haltevorrichtung 12 an der Messlatte 13 befestigt ist.

Der Laserempfänger 11 ist ein Hilfsmittel für Punkt-, Linien- oder Rotationslasergeräte, das bei schlecht sichtbaren Laserstrahlen eingesetzt wird, um die Sichtbarkeit der Laserstrahlen zu verbessern. Dabei kann der Laserempfänger 11 vom Bediener direkt in den Laserstrahl gehalten werden, oder der Laserempfänger 11 wird an einem Halteelement befestigt. Bei Halteelementen wird zwischen Stativen, mobilen Halteelementen und feststehenden Halteelementen unterschieden. Feststehende Halteelemente sind Elemente in der Messumgebung, die eine andere Funktion innehaben und vom Bediener als Halteelemente genutzt werden, wie beispielsweise Wandschienen, Tür- oder Fensterrahmen und Rohre. Mobile Halteelemente werden vom Bediener in der Hand gehalten und können im Raum bewegt werden, wie beispielsweise Messlatten, Nivellierlatten und Lotstöcke. Dabei sind die mobilen Halteelemente als längliche Halteelemente ausgebildet und weisen eine Querschnittsabmessung auf, die sehr viel kleiner als die Abmessung in Längsrichtung ist.

Der Laserempfänger 11 umfasst ein Grundgehäuse **14**, eine Bedienungseinrichtung **15** zur Bedienung des Laserempfängers 11, eine Detektoreinrichtung **16** zur Erfassung eines Laserstrahls, ein Display **17** und eine akustische Anzeigeeinrichtung **18**. Die elektrischen Komponenten des Laserempfängers 11 werden auch als Messeinrichtung **19** bezeichnet. Die Messeinrichtung 19 ist zumindest teilweise vom Grundgehäuse 14 umgeben oder in das Grundgehäuse 14 integriert. Das Grundgehäuse 14 umfasst eine Vorderfläche **21**, eine der Vorderfläche 21 gegenüber liegende Rückfläche **22**, eine Oberseite **23**, eine der Oberseite gegenüber liegende Unterseite **24** und zwei Seitenflächen **25, 26**.

Die Bedienungseinrichtung 15, die Detektoreinrichtung 16, das Display 17 und die akustische Anzeigeeinrichtung 18 sind auf der Vorderfläche 21 des Grundgehäuses 14 angeordnet. Um einen hohen Bedienkomfort bei der Bedienung des Laserempfängers 11 zu bieten, sind die Vorderfläche 21 und die Rückfläche 22 die beiden größten Gehäuseflächen des Grundgehäuses 14 mit einer längeren Seite (Länge) und einer kürzeren Seite (Breite). Die beiden Seitenflächen 25, 26 grenzen an die längere Seite der Vorderfläche 21 und sind durch die Länge und eine Tiefe des Grundgehäuses 14 festgelegt.

Der Laserempfänger 11 umfasst zusätzlich ein Schutzgehäuse **27**, das das Grundgehäuse 14 im verbundenen Zustand umgibt (FIG. 1 B), und eine erste Verbindungseinrichtung **28** zur Verbindung des Laserempfängers 11 mit der Haltevorrichtung 12. Das Grundgehäuse 14 und das Schutzgehäuse 27 werden gemeinsam als Gerätegehäuse **29** des Laserempfängers 11 bezeichnet. Die zweiteilige Ausbildung des Gerätegehäuses 29 aus Grundgehäuse 14 und Schutzgehäuse 27 hat den Vorteil, dass die erfindungsgemäße Haltevorrichtung 12 an herkömmlichen Laserempfängern nachgerüstet werden kann.

Das Schutzgehäuse 27 umfasst, wie das Grundgehäuse 14, eine Vorderfläche **31**, eine der Vorderfläche 31 gegenüber liegende Rückfläche **32**, eine Oberseite **33**, eine der Oberseite gegenüber liegende Unterseite **34** und zwei Seitenflächen **35, 36**. Im verbundenen Zustand liegen die Vorder- und Rückflächen 31, 32, die Ober- und Unterseite 33, 34 und die Seitenflächen 35, 36 des Schutzgehäuses 27 den entsprechenden Gehäuseflächen 21-26 des Grundgehäuses 14 gegenüber. Das Schutzgehäuse 27 kann aus einem elastomeren oder thermoplastisch-elastomeren Kunststoff ausgebildet sein. Bei einem Sturz des Laserempfängers 11 schützt das Schutzgehäuse 27 den Laserempfänger 11 vor Beschädigung. Über die Materialeigenschaften des Kunststoffes wird eingestellt, dass sich das Schutzgehäuse 27 bei einem Sturz elastisch verformen und anschließend in die unverformte Gestalt zurückkehren kann.

Das Schutzgehäuse 27 kann vorstehende Stoßfangelemente aufweisen, die bevorzugt an den Übergängen der Gehäuseflächen 31-36 des Schutzgehäuses 27 in Form von Kanten oder Ecken ausgebildet sind. Am Grundgehäuse 14 können ebenfalls Schutzelemente vorgesehen sein, die den Laserempfänger 11 schützen, wenn der Laserempfänger 11 vom Bediener ohne Schutzgehäuse 27 und Haltevorrichtung 12 in den Laserstrahl gehalten wird. Dabei ist das Schutzgehäuse 27 so ausgebildet, dass der Laserempfänger 11 auch ohne Haltevorrichtung 12 mit dem Schutzgehäuse 27 eingesetzt werden kann.

Die Haltevorrichtung 12 umfasst ein Grundelement **41**, eine, mit dem Grundelement 41 verbundene, Befestigungseinrichtung **42** zur Befestigung der Haltevorrichtung 12 an der Messlatte 13, und eine, mit dem Grundelement 41 verbundene, zweite Verbindungseinrichtung **43** zur Verbindung der Haltevorrichtung 12 mit dem Laserempfänger 11. Die Haltevorrichtung 12 verbindet den Laserempfänger 11 starr mit der Messlatte 13, d.h. der Laserempfänger 11 ist im verbundenen Zustand bezüglich der Messlatte 13 nicht beweglich. Die Befestigungseinrichtung 42 ist beispielsweise als Klemmeinrichtung mit ebenen Klemmbacken ausgebildet, die über ein Verstellelement **44** verstellt werden, bis die Klemmbacken an den Seitenflächen der Messlatte 13 anliegen und die Haltevorrichtung 12 an der Messlatte 13 geklemmt ist.

Der Laserempfänger 11 und die Haltevorrichtung 12 werden mittels der ersten und zweiten Verbindungseinrichtung 28, 43 lösbar miteinander verbunden. Die Verbindung zwischen dem Laserempfänger 11 und der Haltevorrichtung 12 ist als kombinierte Magnet- und Steckverbindung ausgebildet, d.h. der Laserempfänger 11 und die Haltevorrichtung 12 sind über eine Magnetverbindung und zusätzlich über eine Steckverbindung miteinander verbunden. Die Steckverbindung sorgt dafür, dass der Laserempfänger 11 und die Haltevorrichtung 12 im verbundenen Zustand in einer definierten Position zueinander ausgerichtet sind. Über die Magnetverbindung sind der Laserempfänger 11 und die Haltevorrichtung 12 lösbar miteinander verbunden. Dabei wird die Stärke der Magnetverbindung so eingestellt, dass der Laserempfänger 11 im Betrieb sicher über die Haltevorrichtung 12 an der Messlatte 13 befestigt ist und die Magnetverbindung bei einer starken Krafteinwirkung auf den Laserempfänger 11 gelöst wird.

Die erste Verbindungseinrichtung 28 des Laserempfängers 11 umfasst zwei erste magnetische Verbindungselemente **45, 46** und zwei erste Steckelemente **47, 48**. Die zweite Verbindungseinrichtung 43 der Haltevorrichtung 12 umfasst zwei zweite magnetische Verbindungselemente **51, 52** und zwei zweite Steckelemente **53, 54**. Im verbundenen Zustand bilden die ersten und zweiten Steckelemente 47, 48, 53, 54 die Steckverbindung und die ersten und zweiten magnetischen Verbindungselemente 45, 46, 51, 52 die Magnetverbindung. Mittels der Steckelemente 47, 48, 53, 54 werden der Laserempfänger 11 und die Haltevorrichtung 12 in einer definierten Position zueinander ausgerichtet und die magnetischen Verbindungselemente 45, 46, 51, 52 sorgen dafür, dass der Laserempfänger 11 und die Haltevorrichtung 12 in der Position lösbar fixiert werden. Dabei wird die Haftkraft der Magnetverbindung so eingestellt, dass der Laserempfänger 11 unter normalen Betriebsbedingungen sicher an der Messlatte 13 befestigt ist, die Magnetverbindung bei einer starken Krafteinwirkung auf den Laserempfänger 11 aber gelöst wird.

Die ersten magnetischen Verbindungselemente des Laserempfängers 11 sind als Permanentmagnete 45, 46 ausgebildet, die in der Seitenfläche 36 des Schutzgehäuses 27 angeordnet sind, und die zweiten magnetischen Verbindungselemente der Haltevorrichtung 12 sind als ferromagnetische Haftelemente 51, 52 ausgebildet, die den Permanentmagneten 45, 46 im verbundenen Zustand gegenüber liegen. Alternativ zur Ausführungsform der FIGN. 1A, B können die Permanentmagnete 45, 46 an der Haltevorrichtung 12 und die ferromagnetischen Haftelemente 51, 52 am Laserempfänger 11 vorgesehen sein oder der Laserempfänger 11 und die Haltevorrichtung 12 weisen jeweils einen Permanentmagnet 45, 46 und ein ferromagnetisches Haftelement 51, 52 auf.

Die Permanentmagnete 45, 46 sind als Kreiszylinder mit kreisförmigen Grund- und Deckflächen und einer Höhe ausgebildet. Die Pole N, S der Permanentmagnete 45, 46 sind auf den Grund- und Deckflächen angeordnet, d.h. die Permanentmagnete 45, 46 sind durch die Höhe entlang einer Magnetisierungsrichtung **55**, die parallel zur Längsachse verläuft, magnetisiert. Die Höhe der Permanentmagnete 45, 46 ist kleiner als der Durchmesser und beträgt bevorzugt ca. 50 % des Durchmessers. Die ferromagnetischen Haftelemente 51, 52 liegen den Permanentmagneten 45, 46 im verbundenen Zustand gegenüber; die Haftkraft zwischen den magnetischen Verbindungselementen 45, 46, 51, 52 nimmt zu, je kleiner der Abstand zwischen den Permanentmagneten 45, 46 und den Haftelementen 51, 52 ist.

Die ersten Steckelemente des Laserempfängers 11 sind als zylinderförmige Steckbuchsen 47, 48 ausgebildet, die in die Seitenfläche 36 des Schutzgehäuses 27 integriert sind, und die zweiten Steckelemente der Haltevorrichtung 12 sind als zylinderförmige Stecker 53, 54 komplementär zu den Steckbuchsen 47, 48 ausgebildet. Die Steckelemente 47, 48, 53, 54 werden entlang einer Steckrichtung **56** bewegt, die parallel zur Zylinderachse bzw. Längsachse der Steckelemente verläuft, und bilden in einer Ebene senkrecht zur Steckrichtung 56 eine formschlüssige Verbindung. Um sicherzustellen, dass der Laserempfänger 11 und die Haltevorrichtung 12 nur in der gewünschten Ausrichtung miteinander verbunden werden können, können die beiden Stecker 53, 54 unterschiedlich groß ausgebildet sein und/oder eine unterschiedliche Querschnittsform aufweisen. FIG. 1A zeigt zwei unterschiedlich große Stecker 53, 54 mit der gleichen kreuzförmigen Querschnittsform.

Die Haltevorrichtung 12 wird mit den Steckern 53, 54 entlang der Steckrichtung 56 in die Steckbuchsen 47, 48 des Laserempfängers 11 bewegt, bis die Seitenfläche 36 des Schutzgehäuses 27 an den ferromagnetischen Haftelementen 51, 52 anschlägt. Die Seitenfläche 36 des Schutzgehäuses 27 ist an die Oberflächen **57, 58** der ferromagnetischen Haftelemente 51, 52 angepasst. Um eine definierte Anlage sicherzustellen, sind die Stecker 53, 54 kürzer als die Steckbuchsen 47, 48 ausgebildet und im verbundenen Zustand von Laserempfänger 11 und Haltevorrichtung 12, d.h. bei geschlossener Steckverbindung der Steckelemente 47, 48, 53, 54, besteht in axialer Richtung (entlang der Steckrichtung 56) ein schmaler Spalt. Die Steckverbindung wird als geschlossen bezeichnet, wenn die Steckelemente 47, 48, 53, 54 senkrecht zur Steckrichtung 56 eine formschlüssige Verbindung bilden und der Laserempfänger 11 und die Haltevorrichtung 12 entlang der Steckrichtung 56 bis zu einem Anschlag aufeinander zu bewegt wurden.

Das Kraftmaximum der Magnetverbindung liegt vor, wenn die Steckverbindung der ersten und zweiten Steckelemente 47, 48, 53, 54 geschlossen ist. Bei geschlossener Steckverbindung ist der Abstand zwischen den Permanentmagneten 45, 46 und den Haftelementen 51, 52 am kleinsten und die Haftkraft zwischen den magnetischen Verbindungselementen 45, 46, 51, 52 am größten. Die Permanentmagnete 45, 46 sind im Schutzgehäuses 27 angeordnet und haben keinen direkten Kontakt mit den ferromagnetischen Haftelementen 51, 52, um die Permanentmagnete 45, 46 mechanisch nicht zu belasten. Da herkömmliche Permanentmagnete gegenüber mechanischen Belastungen empfindlich sind, wird die Lebensdauer der Permanentmagnete 45, 46 durch die räumliche Trennung erhöht und die Reproduzierbarkeit der magnetischen Haltekräfte verbessert. Außerdem sind die Permanentmagnete 45, 46 vor Korrosion geschützt.

Die beiden Permanentmagnete 45, 46, die in der Seitenfläche 36 des Schutzgehäuses 27 angeordnet sind, sind außerhalb des Schwerpunktes des Laserempfängers 11 angeordnet. Dabei sind der eine Permanentmagnet 45 oberhalb und der andere Permanentmagnet 46 unterhalb des Schwerpunktes angeordnet. Durch die Anordnung eines Permanentmagneten 45 oberhalb des Schwerpunktes wird die Gefahr einer Verkippung des Laserempfängers 11 reduziert. Ein typischer Störfall entsteht in der Praxis, wenn der Laserempfänger 11 an der Messlatte 13 befestigt ist und die Messlatte 13 mit der Spitze auf einen Untergrund stößt. Da der Laserempfänger 11 seitlich an der Messlatte 13 befestigt ist, entsteht ein Drehmoment, das die Unterkante der Haltevorrichtung 12 beim unteren Haftelement 58 abkippen lässt. Je länger der Hebel ist, den der obere Permanentmagnet 45 mit der Unterkante des unteren Haftelementes 58 bildet, umso grösser ist die kritische Grenze, die das Drehmoment überschreiten muss, bevor der Laserempfänger 11 verkippt. Die Verwendung von zwei Permanentmagneten 45, 46 ist beispielsweise vorteilhaft, wenn der Laserempfänger 11 mit der Messlatte 13 waagerecht transportiert wird.

Der Laserempfänger 11 ist mittels der Haltevorrichtung 12 an der Messlatte 13 befestigt. Neben der Messlatte 13 kann die Haltevorrichtung 12 an allen länglichen Halteelementen befestigt werden. Längliche Halteelemente besitzen einen Durchmesser, der kleiner als die Länge ist, und können als Stab, Rohr oder Profil ausgebildet sein. Stabförmige Halteelemente weisen einen geschlossenen Querschnitt auf, rohrförmige Halteelemente einen hohlen, geschlossenen Querschnitt und profilförmige Halteelemente einen offenen Querschnitt. Die Anlagefläche kann eben ausgebildet sein oder eine V-Form aufweisen. Eine ebene Anlagefläche eignet sich für Halteelemente mit rechteckigem Querschnitt und eine V-förmige Anlagefläche eignet sich besonders für Halteelemente mit einem runden oder abgerundeten Querschnitt.

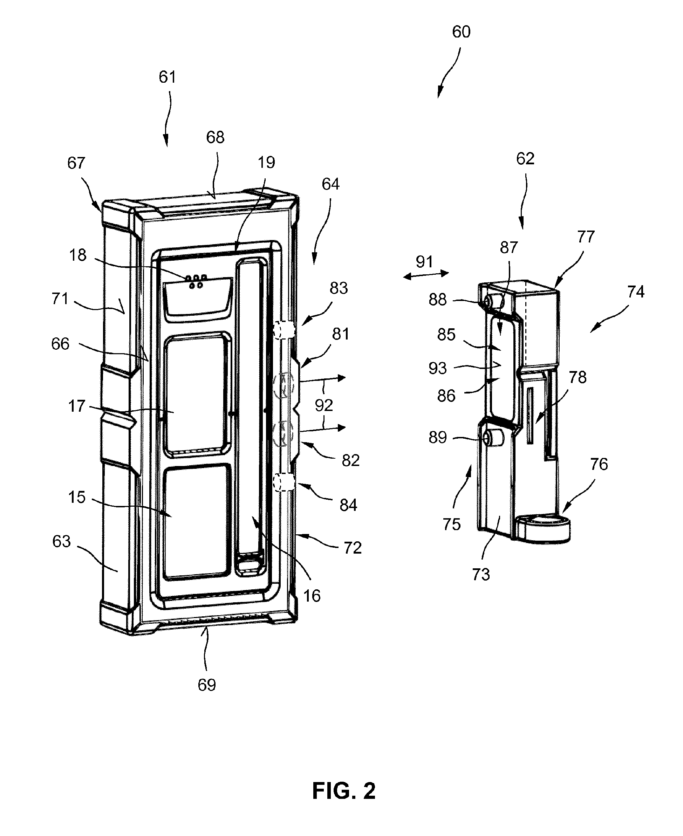

**FIG. 2** zeigt eine zweite Ausführungsform eines erfindungsgemäßen Gerätesystems **60** bestehend aus einem erfindungsgemäßen Laserempfänger **61** und einer erfindungsgemäßen Haltevorrichtung **62** zur Befestigung des Laserempfängers 61 an einem länglichen Halteelement, beispielsweise an einem Rohr.

Der Laserempfänger 61 umfasst ein Gerätegehäuse **63**, die Messeinrichtung 19 und eine, mit dem Gerätegehäuse 63 verbundene, erste Verbindungseinrichtung **64** zur Verbindung des Laserempfängers 61 mit der Haltevorrichtung 62. Vom Laserempfänger 11 des Gerätesystems 10 unterscheidet sich der Laserempfänger 61 durch das Gerätegehäuse 63, das im Unterschied zum zweiteiligen Gerätegehäuse 29 des Laserempfängers 61 einteilig ausgebildet ist. Das Gerätegehäuse 63 umfasst eine Vorderfläche **66**, eine der Vorderfläche gegenüber liegende Rückfläche **67**, eine Oberseite **68**, eine der Oberseite gegenüber liegende Unterseite **69** und zwei Seitenflächen **71, 72**.

Die Haltevorrichtung 62 umfasst ein Grundelement **73**, eine Befestigungseinrichtung **74** zur Befestigung der Haltevorrichtung 62 am Halteelement und eine zweite Verbindungseinrichtung **75** zur Verbindung der Haltevorrichtung 62 mit dem Laserempfänger 61; zusätzlich umfasst die Haltevorrichtung 62 einen Nivelliersensor **76**, mit dem die Haltevorrichtung 62 am Lot ausgerichtet werden kann. Der Laserempfänger 61 wird von der Haltevorrichtung 62 starr mit dem Halteelement verbunden, d.h. der Laserempfänger 61 ist im verbundenen Zustand bezüglich des Halteelementes nicht beweglich.

Die Befestigungseinrichtung **74** der Haltevorrichtung 62 umfasst eine Anlagefläche **77** und einen Gurt, der durch eine Gurtführung **78** im Grundelement 73 gezogen werden kann. Alternativ oder zusätzlich können im Grundelement 73 Magnete angeordnet sein, so dass die Haltevorrichtung 62 über die Anlagefläche 77 an einem magnetisch ausgebildeten Halteelement befestigt werden kann. Die Anlagefläche 77 kann, wie in FIG. 2 gezeigt, eben ausgebildet sein oder alternativ eine V-Form aufweisen. Eine ebene Anlagefläche eignet sich für Halteelemente mit rechteckigem Querschnitt und eine V-förmige Anlagefläche eignet sich besonders für Halteelemente mit einem runden oder abgerundeten Querschnitt.

Die erste Verbindungseinrichtung 64 des Laserempfängers 61 umfasst zwei als Permanentmagnete **81, 82** ausgebildete erste magnetische Verbindungselemente und zwei, als Steckbuchsen **83, 84** ausgebildete, erste Steckelemente. Die zweite Verbindungseinrichtung 75 der Haltevorrichtung 62 umfasst zwei zweite magnetische Verbindungselemente **85, 86**, die in ein ferromagnetisches Haftelement **87** integriert sind, und zwei, als Stecker ausgebildete, zweite Steckelemente **88, 89**. Im verbundenen Zustand bilden die ersten und zweiten Steckelemente 83, 84, 88, 89 die Steckverbindung und die ersten und zweiten magnetischen Verbindungselemente 81, 82, 85, 86 die Magnetverbindung. Die Haltevorrichtung 62 wird mit den Steckern 88, 89 entlang einer Steckrichtung **91**, die parallel zur Längsachse der Steckelemente verläuft, in die Steckbuchsen 83, 84 des Laserempfängers 11 bewegt, bis die Seitenfläche 72 des Gerätegehäuses 63 an dem ferromagnetischen Haftelement 87 anschlägt.

Die Permanentmagnete 81, 82 sind, wie die Permanentmagnete 45, 46 des Laserempfängers 11, kreiszylinderförmig ausgebildet und durch die Höhe entlang einer Magnetisierungsrichtung **92**, die parallel zur Zylinderachse verläuft, axial magnetisiert. Die Seitenfläche 72 des Gerätegehäuses 63 ist an die Oberfläche **93** des ferromagnetischen Haftelementes 87 angepasst. Die Verbindungselemente 81-84 der ersten Verbindungseinrichtung 64 sind so angeordnet, dass die Magnetisierungsrichtung 92 der Permanentmagnete 81, 82 parallel zur Steckrichtung 91 der Steckelemente 83, 84 verläuft.

Im verbundenen Zustand liegen die Permanentmagnete 81, 82 dem ferromagnetischen Haftelement 87 gegenüber. Die Haftkraft zwischen den magnetischen Verbindungselementen nimmt zu, je kleiner der Abstand zwischen den Permanentmagneten 45, 46 und dem Haftelement 87 ist. Das Kraftmaximum der Magnetverbindung liegt vor, wenn die Steckverbindung geschlossen ist und die erste und zweite Verbindungseinrichtung 64, 75 die Seitenfläche 72 des Gerätegehäuses 63 mit der Oberfläche 93 der ferromagnetischen Platte 87 verbinden. Die Seitenfläche 72 des Gerätegehäuses 63 wird als erste Kontaktfläche des Lasergerätes 61 bezeichnet und die Oberfläche 93 als zweite Kontaktfläche der Haltevorrichtung 62.

Alternativ können die Permanentmagnete 81, 82 an der Haltevorrichtung 62 und das ferromagnetische Haftelement 87 am Laserempfänger 61 vorgesehen sein oder der Laserempfänger 61 und die Haltevorrichtung 62 weisen jeweils einen Permanentmagnet 81, 82 und ein ferromagnetisches Haftelement 87 auf. Wenn die Permanentmagnete 81, 82 an der Haltevorrichtung 62 vorgesehen sind, kann das Gerätesystem 60 an einem magnetischen Halteelement befestigt werden. Die Permanentmagnete 81, 82 müssen lediglich die erforderliche Haltekraft erzeugen, um den Laserempfänger 61 und die Haltevorrichtung 62 sicher zu befestigen. Die Stecker 88, 89 können, wie in FIG. 2 gezeigt, an der Haltevorrichtung 62 oder alternativ am Laserempfänger 61 angeordnet sein. Da der Laserempfänger 61 auch ohne Haltevorrichtung 62 eingesetzt wird, hat die in FIG. 2 gezeigte Ausführung den Vorteil, dass die Stecker 88, 89 nicht am Gerätegehäuse 63 des Laserempfängers 61 vorstehen und den Bediener nicht behindern.

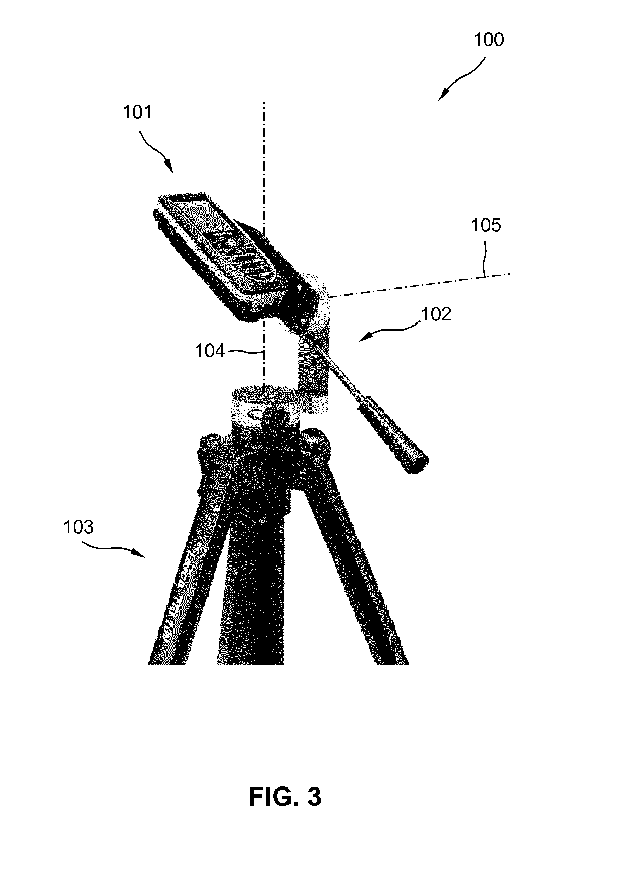

**FIG. 3** zeigt eine dritte Ausführungsform eines erfindungsgemäßen Gerätesystems **100** bestehend aus einem als Laserdistanzmessgerät **101** ausgebildeten erfindungsgemäßen Lasergerät und einer, als Stativadapter ausgebildeten, erfindungsgemäßen Haltevorrichtung **102** zur Befestigung des Laserdistanzmessgerätes 101 an einem Stativ **103**.

Das Laserdistanzmessgerät 101 ist mittels des Stativadapters 102 auf dem Stativ 103 angeordnet. Der Stativadapter 102 ist in der in FIG. 3 gezeigten Ausführungsform um zwei zueinander senkrechte Achsen drehbar, um eine vertikale Drehachse **104** und eine horizontale Kippachse **105**. Das Laserdistanzmessgerät 101 ist über den Stativadapter 102 mit dem Stativ 103 verbunden, der bezüglich des Stativs 103 eine Drehbewegung um die vertikale Drehachse 104 und eine Schwenkbewegung um die Kippachse 105 ermöglicht. Eine weitere Verstellung kann beispielsweise über ein höhenverstellbares Stativ 103 erfolgen. Das Laserdistanzmessgerät 101 kann dabei in jeder beliebigen Position angeordnet werden, so dass der Bediener den Laserstrahl zur Distanzmessung auf jeden Zielpunkt ausrichten kann.

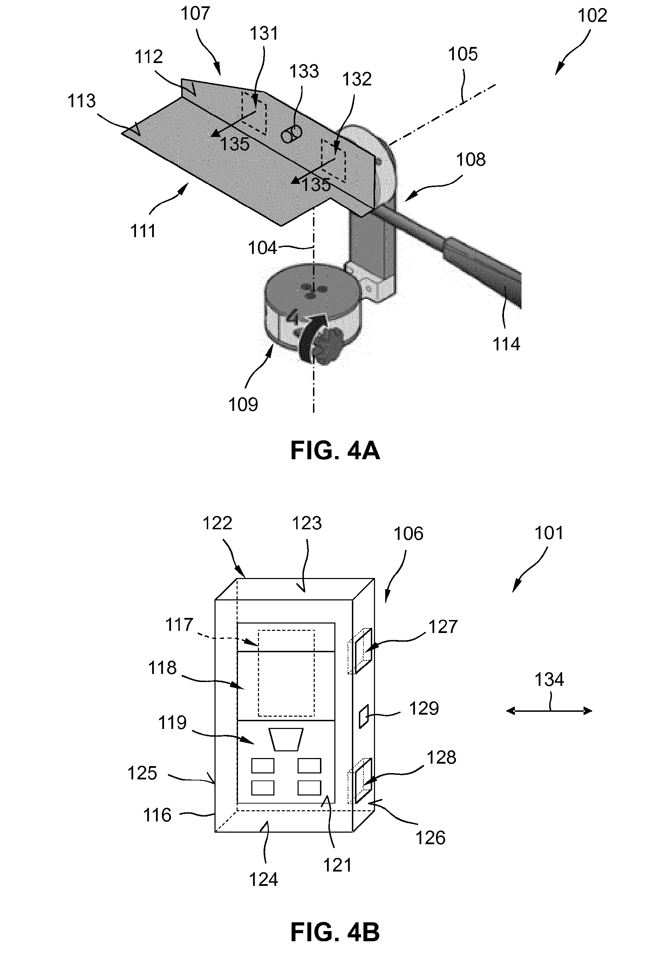

**FIGN. 4A****, B** zeigen den Aufbau der erfindungsgemäßen Haltevorrichtung 102 (FIG. 4A) und den Aufbau des erfindungsgemäßen Laserdistanzmessgerätes 101 (FIG. 4B) im Detail. Die Verbindung des Laserdistanzmessgerätes 101 und der Haltevorrichtung 102 erfolgt über eine erste Verbindungseinrichtung **106** und eine zweite Verbindungseinrichtung **107**.

Die Haltevorrichtung 102 des Gerätesystems 100 ist als Stativadapter ausgebildet (FIG. 4A), mit dem ein Lasergerät, wie das Laserdistanzmessgerät 101, auf dem Stativ 103 befestigt werden kann. Der Stativadapter 102 umfasst ein als Stativkopf **108** ausgebildetes Grundelement, eine Befestigungseinrichtung **109** zur Befestigung des Stativadapters 102 an dem Stativ 103 und die zweite Verbindungseinrichtung 107 zur Verbindung des Stativadapters 102 mit dem Laserdistanzmessgerät 101. Die Befestigungseinrichtung 109 ist als Gewindebohrung ausgebildet, die mit einem Gewindebolzen des Stativs 103 eine Gewindeverbindung bildet.

Das Laserdistanzmessgerät 101 ist über den Stativadapter 102 mit dem Stativ 103 verbunden und bezüglich des Stativs 103 um die vertikale Drehachse 104 und die horizontale Kippachse 105 beweglich ausgebildet. Der Stativkopf 108 weist ein Aufnahmeelement **111** mit einer ersten und zweiten Aufnahmefläche **112, 113** auf. Das Aufnahmeelement 111 ist mittels eines Griffes **114** um die Kippachse 105 verstellbar.

Das erfindungsgemäße Lasergerät des Gerätesystems 100 ist als Laserdistanzmessgerät 101 ausgebildet, mit dem die Distanz eines Zielpunktes gemessen wird (FIG. 4B). Das Laserdistanzmessgerät 101 umfasst ein Gerätegehäuse **116**, eine im Gerätegehäuse 116 angeordnete Messeinrichtung **117** und die, mit dem Gerätegehäuse 116 verbundene, erste Verbindungseinrichtung 106 zur Verbindung des Laserdistanzmessgerätes 101 mit dem Stativadapter 102, zusätzlich umfasst das Laserdistanzmessgerät 101 eine Anzeigeeinrichtung **118** und eine Bedienungseinrichtung **119**. Das Gerätegehäuse 116 umfasst eine Vorderfläche **121**, eine der Vorderfläche gegenüber liegende Rückfläche **122**, eine Oberseite **123**, eine der Oberseite gegenüber liegende Unterseite **124** und zwei Seitenflächen **125, 126**.

Die Anzeige- und Bedienungseinrichtungen 118, 119 sind in die Vorderfläche 121 des Gerätegehäuses 116 eingebettet. Um einen hohen Bedienkomfort bei der Bedienung des Laserdistanzmessgerätes 101 und der Anzeige des Distanzwertes zu gewährleisten, sind die Vorderfläche 121 und die Rückfläche 122 die beiden größten Gehäuseflächen des Gerätegehäuses 116 mit einer längeren Seite (Länge) und einer kürzeren Seite (Breite). Die an die Vorderfläche 121 angrenzenden Ober- und Unterseiten 123, 124 sowie die Seitenflächen 125, 126 des Gerätegehäuses 116 sind möglichst klein ausgebildet, um ein handliches Laserdistanzmessgerät 101 aufzubauen. Die beiden Seitenflächen 125, 126 grenzen an die längere Seite der Vorderfläche 121 und sind durch die Länge und eine Tiefe des Gerätegehäuses 116 festgelegt.

Die Verbindung des Laserdistanzmessgerätes 101 und der Haltevorrichtung 102 erfolgt über die erste und zweite Verbindungseinrichtung 106, 107. Die erste Verbindungseinrichtung 106 des Laserdistanzmessgerätes 101 umfasst zwei, als ferromagnetische Haftelemente **127**, **128** ausgebildete, erste magnetische Verbindungselemente und ein, als Steckbuchse ausgebildetes, erstes Steckelement **129**. Die zweite Verbindungseinrichtung 107 des Stativadapters 102 umfasst zwei, als Permanentmagnete **131, 132** ausgebildete, zweite magnetische Verbindungselemente und ein, als Stecker **133** ausgebildetes, zweites Steckelement. Im verbundenen Zustand bilden das erste und zweite Steckelement 129, 133 die Steckverbindung und die ersten und zweiten magnetischen Verbindungselemente 127, 128, 131, 132 die Magnetverbindung.

Das Laserdistanzmessgerät 101 wird mit der Steckbuchse 129 entlang einer Steckrichtung **134** über den zur Steckbuchse 129 komplementär ausgebildeten, Stecker 133 bewegt, bis die Seitenfläche 126 an der Aufnahmefläche 112 anschlägt. Die Permanentmagnete 131, 132 sind als Quader mit einer quadratischen Grundfläche und einer Höhe ausgebildet und weisen eine axiale Magnetisierung über die Höhe entlang einer Magnetisierungsrichtung **135** auf. Die Verbindungselemente 131-133 der zweiten Verbindungseinrichtung 107 sind so angeordnet, dass die Magnetisierungsrichtung 135 der Permanentmagnete 131, 132 parallel zur Steckrichtung 134 der Steckelemente verläuft. Das Kraftmaximum der Magnetverbindung zwischen den magnetischen Verbindungselementen 127, 128, 131, 132 liegt vor, wenn die Steckverbindung geschlossen ist und die Seitenfläche 126 des Gerätegehäuses 116 an der Aufnahmefläche 112 des Aufnahmeelementes 111 anschlägt. Die Seitenfläche 126 und die Aufnahmefläche 112 werden als erste Kontaktfläche des Lasergerätes 101 und zweite Kontaktfläche der Haltevorrichtung 102 bezeichnet.

Die erste Verbindungseinrichtung 106 kann, wie in FIG. 4B gezeigt, in der Seitenfläche 126 des Gerätegehäuses 116 oder alternativ in der Rückfläche 122 des Gerätegehäuses 116 angeordnet sein. Die zweite Verbindungseinrichtung 107 ist analog zur ersten Verbindungseinrichtung 106 entweder in der ersten Aufnahmefläche 112, die der Seitenfläche 126 gegenüber liegt, oder in der zweiten Aufnahmefläche 113, die der Rückfläche 122 gegenüber liegt, angeordnet.

Die in FIG. 4A im Detail dargestellte erfindungsgemäße Haltevorrichtung 102 ist als Stativadapter ausgebildet. Wenn die Verstellung des Grundelementes 108 auf eine Schwenkbewegung um die Kippachse 105 begrenzt wird und als Befestigungseinrichtung eine herkömmliche Klemmeinrichtung, wie beispielsweise die Befestigungseinrichtung 26 der FIG. 1, eingesetzt wird, erhält man eine, als Lotstockadapter ausgebildete, Haltevorrichtung zur Befestigung von Lasergeräten.

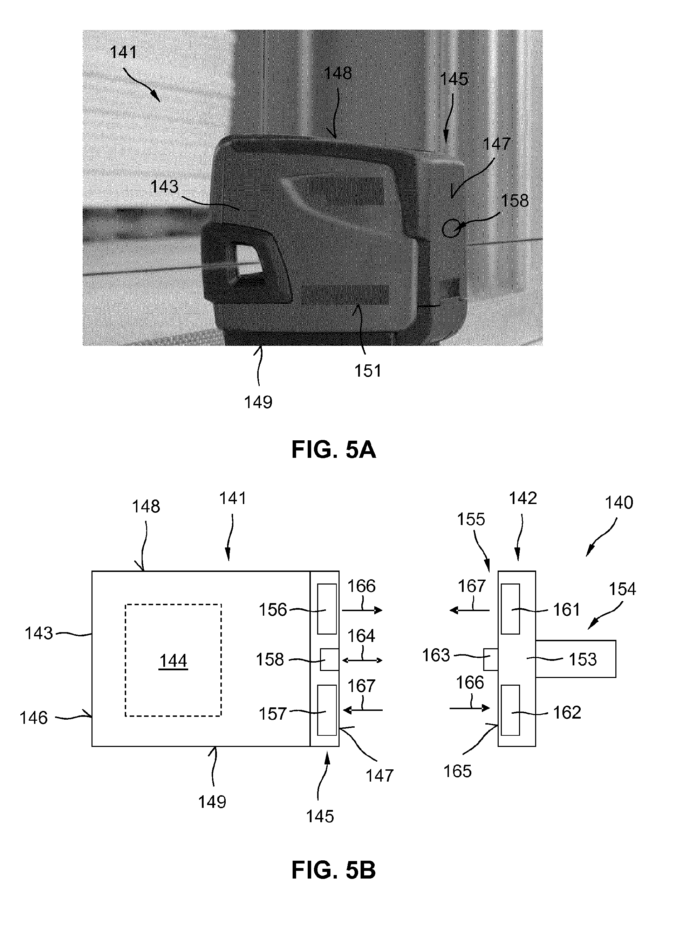

**FIGN. 5A****, B** zeigen eine vierte Ausführungsform eines erfindungsgemäßen Gerätesystems **140** bestehend aus einem erfindungsgemäßen Punktlasergerät **141** und einer erfindungsgemäßen Haltevorrichtung **142** zur Befestigung des Punktlasergerätes 141 an einem länglichen Halteelement, beispielsweise an der in FIG. 1 gezeigten Messlatte 13. Dabei zeigt FIG. 5A das Punktlasergerät 141 in einer dreidimensionalen Darstellung und FIG. 5B das Punktlasergerät 141 und die Haltevorrichtung 142 im nicht-verbundenen Zustand in einer schematischen Darstellung.

Das erfindungsgemäße Lasergerät des Gerätesystems 140 ist als selbstnivellierendes Punktlasergerät 141 ausgebildet, mit dem Punktstrahlen erzeugt werden (FIG. 5A). Das Punktlasergerät 141 umfasst ein Gerätegehäuse **143**, eine Messeinrichtung **144** und eine, mit dem Gerätegehäuse 143 verbundene, erste Verbindungseinrichtung **145** zur Verbindung des Punktlasergerätes 141 mit der Haltevorrichtung 142. Die Messeinrichtung 144 ist innerhalb des Gerätegehäuses 143 angeordnet. Das Gerätegehäuse 143 umfasst eine Vorderfläche **146**, eine der Vorderfläche 146 gegenüber liegende Rückfläche **147**, eine Oberseite **148**, eine der Oberseite 148 gegenüber liegende Unterseite **149** und zwei Seitenflächen **151, 152**.

Die Haltevorrichtung 142 umfasst ein Grundelement **153**, eine Befestigungseinrichtung **154** zur Befestigung der Haltevorrichtung 142 am Halteelement und eine zweite Verbindungseinrichtung **155** zur Verbindung der Haltevorrichtung 142 mit dem Punktlasergerät 141. Die Befestigungseinrichtung 154 kann analog zur Befestigungseinrichtung 42 der Haltevorrichtung 12 als Klemmeinrichtung mit ebenen oder V-förmigen Klemmbacken ausgebildet sein, die über das Verstellelement 44 verstellt werden, bis die Klemmbacken an den Seitenflächen des Halteelementes anliegen. Alternativ können alle weiteren bekannten Befestigungseinrichtungen eingesetzt werden, die zur Befestigung der Haltevorrichtung an einem Halteelement geeignet sind.

Die Verbindung des Punktlasergerätes 141 und der Haltevorrichtung 142 erfolgt über die erste und zweite Verbindungseinrichtung 145, 155. Die erste Verbindungseinrichtung 145 des Punktlasergerätes 141 umfasst zwei als Permanentmagnete **156, 157** ausgebildete, erste magnetische Verbindungselemente und ein, als Steckbuchse **158** ausgebildetes, erstes Steckelement. Die zweite Verbindungseinrichtung 155 der Haltevorrichtung 142 umfasst zwei als Permanentmagnete **161, 162** ausgebildete, zweite magnetische Verbindungselemente und ein, als Stecker ausgebildetes, zweites Steckelement **163**. Im verbundenen Zustand bilden die ersten und zweiten magnetischen Verbindungselemente 156, 157, 161, 162 die Magnetverbindung und das erste und zweite Steckelement 158, 163 die Steckverbindung.

Die Steckelemente sind als zylinderförmiger Stecker 163 mit einer kreisförmigen Querschnittsfläche und als komplementäre Steckbuchse 158 ausgebildet; die Steckrichtung **164** verläuft parallel zur Zylinderachse der Steckelemente. Das Punktlasergerät 141 wird mit der Steckbuchse 158 entlang der Steckrichtung 164 über den Stecker 163 bewegt, bis die Rückfläche 147 des Gerätegehäuses 143 an einer Vorderseite **165** des Grundelementes 153 anschlägt. Die Rückfläche 147 des Gerätegehäuses 143 ist an die Vorderseite 165 des Grundelementes 153 angepasst. Die Rückfläche 147 des Gerätegehäuses 143 und die Vorderseite 165 des Grundelementes 153 werden als erste Kontaktfläche des Lasergerätes 141 und zweite Kontaktfläche der Haltevorrichtung 142 bezeichnet.

Die Permanentmagnete 156, 157 der ersten Verbindungseinrichtung 145 und die Permanentmagnete 161, 162 der zweiten Verbindungseinrichtung 155 sind jeweils als zylinderförmige Permanentmagnete mit einer axialen Magnetisierung ausgebildet, d.h. die Pole der Permanentmagnete befinden sich auf den Grund- und Deckflächen. Um das Punktlasergerät 141 an der Haltevorrichtung 142 befestigen zu können, müssen ungleiche Pole einander gegenüber liegen. Die Permanentmagnete 156, 162 weisen eine erste Magnetisierungsrichtung **166** und die Permanentmagnete 157, 161 eine zweite Magnetisierungsrichtung **167** auf, wobei die zweite Magnetisierungsrichtung 167 der ersten Magnetisierungsrichtung 166 entgegen gerichtet ist.

Die Magnetisierungsrichtungen 166, 167 der Permanentmagnete 156, 157, 161, 162 verlaufen parallel zur Steckrichtung 165. Das Kraftmaximum der Magnetverbindung zwischen den Permanentmagneten 156, 157, 161, 162 liegt vor, wenn die Rückfläche 147 des Gerätegehäuses 143 an der Vorderseite 165 des Grundelementes 153 anschlägt und die Steckverbindung geschlossen ist. Die in FIG. 5B gezeigte Anordnung der Permanentmagnete 156, 157, 161, 162 hat den Vorteil, dass sich die Permanentmagnete nur in der gewünschten Ausrichtung anziehen; wird die Haltevorrichtung 142 um 180° verdreht in die Steckbuchse geführt, liegen gleiche Pole einander gegenüber und die Permanentmagnete 156, 157 des Punktlasergerätes 141 stoßen die Permanentmagnete 161, 162 der Haltevorrichtung 142 ab.

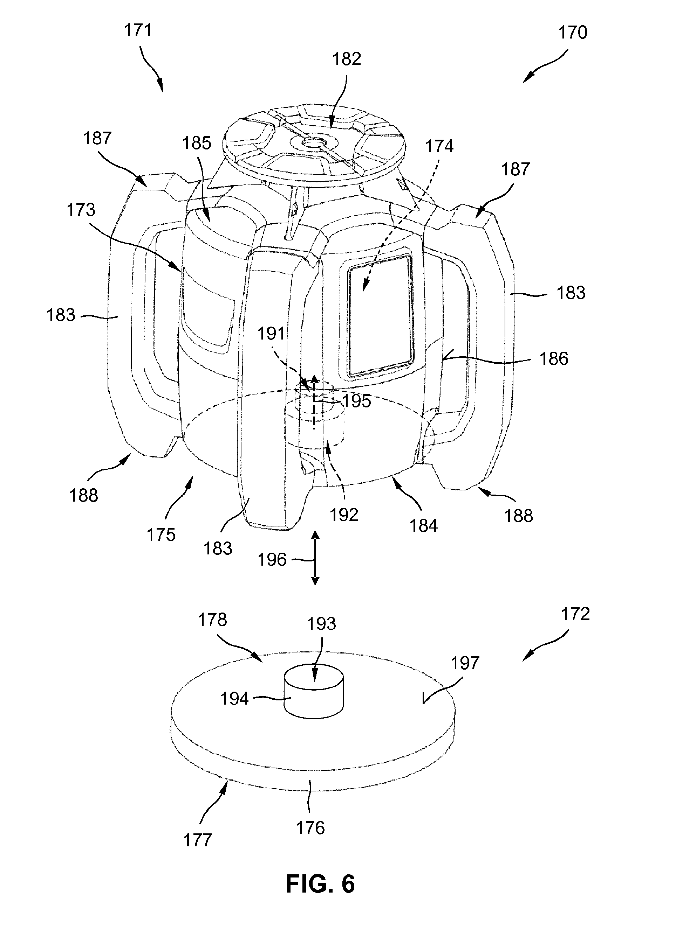

**FIG. 6** zeigt eine fünfte Ausführungsform eines erfindungsgemäßen Gerätesystems **170** mit einem Rotationslasergerät **171** und einer Haltevorrichtung **172** zur Befestigung des Rotationslasergerätes 171 an einem Stativ.

Das erfindungsgemäße Lasergerät des Gerätesystems 170 ist als Rotationslasergerät 171 ausgebildet, mit dem ein Linienstrahl erzeugt werden kann. Das Rotationslasergerät 171 umfasst ein Gerätegehäuse **173**, eine Messeinrichtung **174**, die innerhalb des Gerätegehäuses 173 angeordnet ist, und eine, mit dem Gerätegehäuse 173 verbundene, erste Verbindungseinrichtung **175** zur Verbindung des Rotationslasergerätes 171 mit der Haltevorrichtung 172.

Die Haltevorrichtung 172 umfasst ein Grundelement **176**, eine Befestigungseinrichtung **177** zur Befestigung der Haltevorrichtung 172 am Stativ und eine zweite Verbindungseinrichtung **178** zur Verbindung der Haltevorrichtung 172 mit dem Rotationslasergerät 171. Die Befestigungseinrichtung 177 ist als Gewindebohrung ausgebildet, die mit einem Gewindebolzen des Stativs eine Gewindeverbindung bildet. Eine lösbare Haltevorrichtung 172 kann auf jedem herkömmlichen Stativ mit Gewindebolzen befestigt werden, so dass jedes herkömmliche Stativ nachgerüstet werden kann. Alternativ kann die Haltevorrichtung 172 in ein Stativ integriert sein; in diesem Fall entspricht das Grundelement 176 dem Stativteller des Stativs.

Das Gerätegehäuse 173 des Rotationslasergerätes 171 umfasst ein Grundgehäuse **181**, einen Rotationskopf **182** und mehrere Handgriffe **183**. Das Grundgehäuse 181 besteht aus einer Grundfläche **184**, einer, der Grundfläche 184 gegenüber liegenden, Deckfläche **185** und einer, die Grund- und Deckfläche 184, 185 verbindenden, Seitenfläche **186**. Der Rotationskopf 182 ist an der Deckfläche 182 mit dem Grundgehäuse 181 verbunden und die Handgriffe 183 sind am Grundgehäuse 181 befestigt. Die Handgriffe 183 weisen an einem, der Deckfläche 182 zugewandten, oberen Ende ein oberes Stoßfangelement **187** und an einem, der Grundfläche 181 zugewandten, unteren Ende ein unteres Stoßfangelement **188** auf. Die Stoßfangelemente 187, 188 verbessern bei einem Sturz oder Stoß des Rotationslasergerätes 171 die Energieaufnahme und den Energieabbau in den Handgriffen 183.

Die Verbindung des Rotationslasergerätes 171 und der Haltevorrichtung 172 erfolgt über die erste und zweite Verbindungseinrichtung 175, 178. Die erste Verbindungseinrichtung 175 des Rotationslasergerätes 171 umfasst ein, als Permanentmagnet ausgebildetes, erstes magnetisches Verbindungselement **191** und ein, als Steckbuchse ausgebildetes, erstes Steckelement **192**. Die zweite Verbindungseinrichtung 178 der Haltevorrichtung 172 umfasst ein zweites magnetisches Verbindungselement **193** und ein, als Stecker ausgebildetes, zweites Steckelement **194**. Der Permanentmagnet 191 ist zylinderförmig in Form einer Scheibe mit einem Durchmesser und einer Höhe ausgebildet und weist eine axiale Magnetisierung entlang einer Magnetisierungsrichtung **195** auf. Der Stecker 194 ist als Kreiszylinder aus einem ferromagnetischen Material ausgebildet und bildet gleichzeitig das zweite magnetische Verbindungselement 193.

Das Rotationslasergerät 171 wird mit der Steckbuchse 192 entlang einer Steckrichtung **196** über den Stecker 194 bewegt, bis die Grundfläche 181 des Grundgehäuses 181 an einer Oberseite **197** des Grundelementes 176 anschlägt. Da der Permanentmagnet 191 entlang der Magnetisierungsrichtung 195 axial magnetisiert ist und der axiale Abstand zwischen den magnetischen Verbindungselementen 191, 193 bei geschlossener Steckverbindung am geringsten ist, liegt das Kraftmaximum der Magnetverbindung vor, wenn die Steckverbindung der Steckelemente 192, 194 geschlossen ist und die Grundfläche 181 des Rotationslasergerätes 171 am Grundelement 176 anschlägt. Im verbundenen Zustand fixiert die Magnetverbindung zwischen den magnetischen Verbindungselementen 191, 193 die Anordnung der Steckelemente 192, 194 in der geschlossenen Steckverbindung. Die Magnetisierungsrichtung 195 des Permanentmagneten 191 verläuft parallel zur Steckrichtung 196 der Steckverbindung. Da das Kraftmaximum der Magnetverbindung in der geschlossenen Steckverbindung vorliegt, ist sichergestellt, dass das Rotationslasergerät 171 und die Haltevorrichtung 172 im verbundenen Zustand eine definierte und reproduzierbare Anordnung aufweisen.

Das, als Stecker ausgebildete, Steckelement 194 besteht aus einem ferromagnetischen Material und das zweite magnetische Verbindungselement 193 ist in den Stecker 194 integriert; der Scheibenmagnet 191 ist hinter der Steckbuchse 192 angeordnet. Die räumliche Trennung des Permanentmagneten 191 von der Steckbuchse 192 hat den Vorteil, dass der Permanentmagnet 191 beim Öffnen und Schließen der Steckverbindung mechanisch nicht belastet wird. Außerdem ist der Permanentmagnet 191 vor Korrosion geschützt, was vor allem bei der Verwendung von Neodym-Magneten wichtig ist.

Die erste und zweite Verbindungseinrichtung 175, 178 weisen jeweils ein Steckelement 192, 194 auf. Die Steckbuchse 192 und der Stecker 194 sind zylinderförmig ausgebildet, so dass das Rotationslasergerät 171 im verbundenen Zustand um eine Drehachse, die koaxial zur Steckrichtung 196 verläuft, drehbar ausgebildet ist. Wenn die Drehbarkeit nicht erwünscht ist, können die Steckelemente 192, 194 senkrecht zur Steckrichtung 196 einen nichtrotationssymmetrischen Querschnitt aufweisen. Außerdem können das zweite magnetische Verbindungselement 193 und das zweite Steckelement 194 als separate Elemente ausgebildet sein. Statt des zylinderförmigen Permanentmagneten 191 kann beispielsweise ein kugelförmiger Permanentmagnet oder ein Hufeisenmagnet eingesetzt werden. Die Form des Permanentmagneten 191 wird an die Gegebenheiten des Lasergerätes 171 und den verfügbaren Raum angepasst.

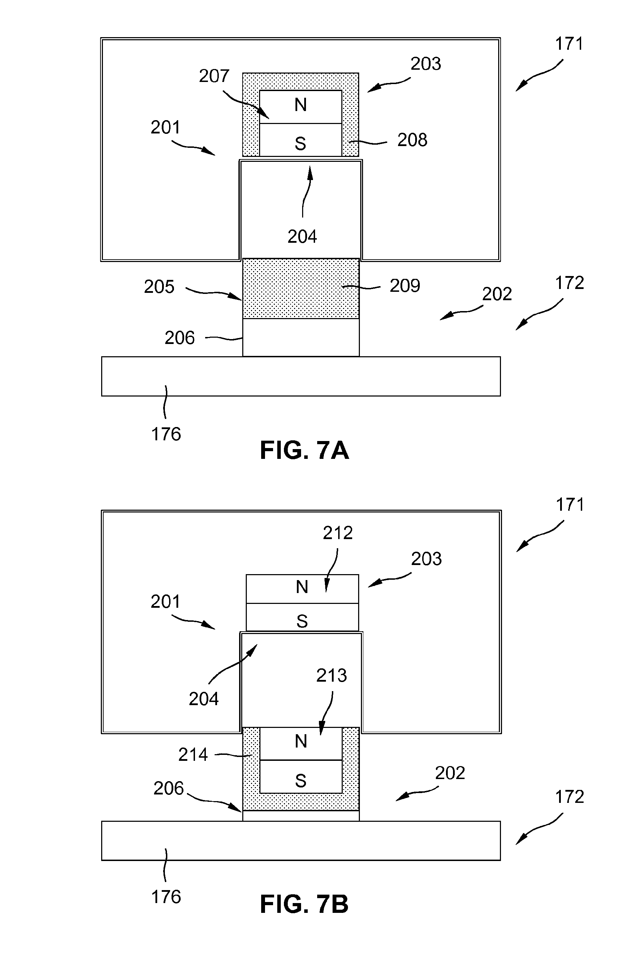

**FIGN. 7A-C** zeigen drei verschiedene Varianten einer Steck- und Magnetverbindung am Beispiel des Gerätesystems 170 mit dem Rotationslasergerät 171 und der Haltevorrichtung 172.

Die Verbindung des Rotationslasergerätes 171 und der Haltevorrichtung 172 erfolgt über eine erste Verbindungseinrichtung **201** und eine zweite Verbindungseinrichtung **202**. Die erste Verbindungseinrichtung 201 des Rotationslasergerätes 171 umfasst ein erstes magnetisches Verbindungselement **203** und ein, als Steckbuchse **204** ausgebildetes, erstes Steckelement. Die zweite Verbindungseinrichtung 202 der Haltevorrichtung 172 umfasst ein zweites magnetisches Verbindungselement **205** und ein, als Stecker **206** ausgebildetes, zweites Steckelement. Der Stecker 206 und die komplementär ausgebildete Steckbuchse 204 können analog zu den Steckelementen 194, 192 ausgebildet sein.

FIG. 7A zeigt eine erste Variante der Steck- und Magnetverbindung zwischen der ersten und zweiten Verbindungseinrichtung 201, 202. Das erste magnetische Verbindungselement 203 umfasst einen Permanentmagneten **207** und ein zusätzliches ferromagnetisches Element **208**, das den Permanentmagneten umgibt. Das zweite magnetische Verbindungselement 205 ist als ferromagnetisches Haftelement **209** ausgebildet und in den Stecker 206 integriert. Das ferromagnetische Element ist als Stahltopf 208 ausgebildet, der das magnetische Feld des Permanentmagneten 207 verändert. Die magnetischen Feldlinien sind zum Haftelement 209 gerichtet und die Haftkraft der Magnetverbindung wird verstärkt. Die Form des ferromagnetischen Elementes 208 wird an die Form des Permanentmagneten 207 angepasst.

FIG. 7B zeigt eine zweite Variante der Steck- und Magnetverbindung zwischen der ersten und zweiten Verbindungseinrichtung 201, 202. Das erste magnetische Verbindungselement 203 ist als Permanentmagnet **212** ausgebildet und das zweite magnetische Verbindungselement 205 umfasst einen Permanentmagneten **213** und ein zusätzliches ferromagnetisches Element **214**, das den Permanentmagneten 213 umgibt.

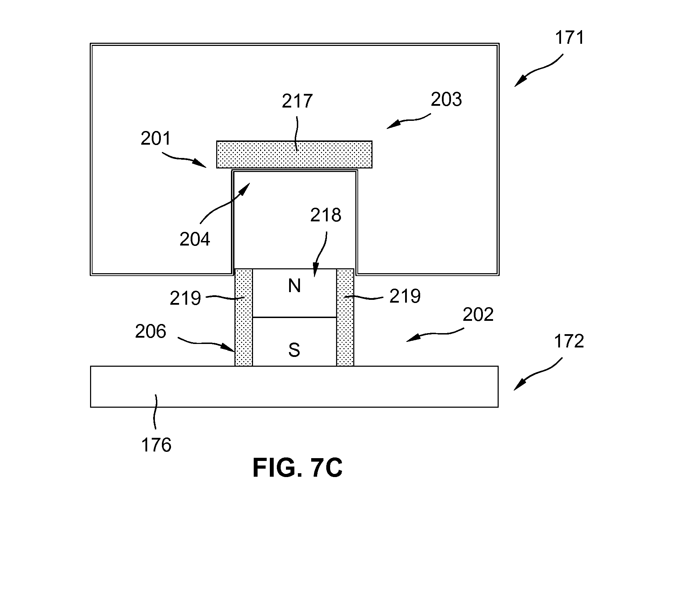

FIG. 7C zeigt eine dritte Variante der Steck- und Magnetverbindung zwischen der ersten und zweiten Verbindungseinrichtung 201, 202. Das erste magnetische Verbindungselement 203 ist als ferromagnetisches Haftelement **217** ausgebildet und das zweite magnetische Verbindungselement 205 umfasst einen Permanentmagneten **218** und ein zusätzliches ferromagnetisches Element **219**, das den Permanentmagneten 218 umgibt.

Die in den FIGN. 7A-C gezeigten Verbindungseinrichtungen 201, 202 können neben dem Gerätesystem 170 mit dem Rotationslasergerät 171 und der Haltevorrichtung 172 auch bei den Gerätesystemen 10, 60, 100, 140 eingesetzt werden. Die als Permanentmagnete ausgebildeten ersten oder zweiten magnetischen Verbindungselemente können beispielsweise durch magnetische Verbindungselemente ersetzt werden, die neben dem Permanentmagneten und ein zusätzliches ferromagnetisches Element umfassen. Außerdem können bei jedem Gerätesystem die magnetischen Verbindungselemente und/oder die Steckelemente vertauscht werden.

## Patentansprüche

1. Lasergerät (11; 61; 101; 141; 171) aufweisend:
■ ein Gerätegehäuse (29; 63; 116; 143; 173),
■ eine Messeinrichtung (19; 117; 144; 174), die zumindest teilweise innerhalb des Gerätegehäuses (29; 63; 116; 143; 173) angeordnet ist, und
■ eine, mit dem Gerätegehäuse (29; 63; 116; 143; 173) verbundene, erste Verbindungseinrichtung (28; 64; 106; 145; 175, 201) zur Verbindung des Lasergerätes (11; 61; 101; 141; 171) mit einer Haltevorrichtung (12; 62; 102; 142; 172),
**dadurch gekennzeichnet, dass** die erste Verbindungseinrichtung (28; 64; 106; 145; 175, 201) ein erstes magnetisches Verbindungselement (45, 46; 81, 82; 127, 128; 156, 157; 191, 203) und ein erstes Steckelement (47, 48; 83, 84; 129; 158; 192, 204) aufweist.

2. Lasergerät nach Anspruch 1, **dadurch gekennzeichnet, dass** das erste Steckelement als Steckbuchse (47, 48; 83, 84; 129; 158; 192, 204) ausgebildet ist.

3. Lasergerät nach Anspruch 1, **dadurch gekennzeichnet, dass** das erste magnetische Verbindungselement als Permanentmagnet (45, 46; 81, 82; 156, 157; 191, 212) ausgebildet ist oder einen Permanentmagneten (207) umfasst.

4. Lasergerät nach Anspruch 3, **dadurch gekennzeichnet, dass** der Permanentmagnet als zylinderförmiger Permanentmagnet (45, 46; 81, 82; 156, 157; 191, 207, 212) oder kugelförmiger Permanentmagnet ausgebildet ist, wobei die Pole des Permanentmagneten parallel zur Steckrichtung des ersten Steckelementes (47, 48; 83, 84; 129; 158; 192, 204) angeordnet sind.

5. Lasergerät nach einem der Ansprüche 3 bis 4, **dadurch gekennzeichnet, dass** das erste magnetische Verbindungselement (203) zusätzlich ein ferromagnetisches oder ferrimagnetisches Element (208) aufweist.

6. Lasergerät nach Anspruch 1, **dadurch gekennzeichnet, dass** das erste magnetische Verbindungselement als ferromagnetisches oder ferrimagnetisches Haftelement (127, 128) ausgebildet ist.

7. Lasergerät nach einem der Ansprüche 1 bis 6, **dadurch gekennzeichnet, dass** die erste Verbindungseinrichtung (28; 64; 106; 145) zwei erste magnetische Verbindungselemente (45, 46; 81, 82; 127, 128; 156, 157) und/oder zwei erste Steckelemente (47, 48; 83, 84) aufweist.

8. Lasergerät nach Anspruch 1, **dadurch gekennzeichnet, dass** das Gerätegehäuse (29) zweiteilig aus einem Grundgehäuse (14) und einem Schutzgehäuse (27), das das Grundgehäuse (14) umgibt, ausgebildet ist, wobei die erste Verbindungseinrichtung (28) im Schutzgehäuse (27) angeordnet ist.

9. Lasergerät nach Anspruch 1, **dadurch gekennzeichnet, dass** das Gerätegehäuse (63; 116; 143; 173) einteilig ausgebildet ist.

10. Haltevorrichtung (12; 62; 102; 142; 172) zur Befestigung eines Lasergerätes (11; 61; 101; 141; 171) an einem Halteelement (13; 103) aufweisend:
■ ein Grundelement (41; 73; 102; 153; 176),
■ eine, mit dem Grundelement (41; 73; 102; 153; 176) verbundene, Befestigungseinrichtung (42; 74; 109; 154; 177) zur Befestigung der Haltevorrichtung (12; 62; 102; 142; 172) am Halteelement (13; 103) und
■ eine, mit dem Grundelement (41; 73; 102; 153; 176) verbundene, zweite Verbindungseinrichtung (43; 75; 107; 155; 178, 202) zur Verbindung der Haltevorrichtung (12; 62; 102; 142; 172) mit dem Lasergerät (11; 61; 101; 141; 171),
**dadurch gekennzeichnet, dass** die zweite Verbindungseinrichtung (43; 75; 107; 155; 178, 202) ein zweites magnetisches Verbindungselement (51, 52; 85, 86; 131, 132; 161, 162; 193, 205) und ein zweites Steckelement (53, 54; 88, 89; 133; 163; 194, 206) aufweist.

11. Haltevorrichtung nach Anspruch 10, **dadurch gekennzeichnet, dass** das zweite Steckelement als Stecker (53, 54; 88, 89; 133; 164; 193, 206) ausgebildet ist.

12. Haltevorrichtung nach Anspruch 10, **dadurch gekennzeichnet, dass** das zweite magnetische Verbindungselement (203) als ferromagnetisches oder ferrimagnetisches Haftelement (217) ausgebildet ist.

13. Haltevorrichtung nach Anspruch 10, **dadurch gekennzeichnet, dass** das zweite magnetische Verbindungselement als Permanentmagnet (131, 132; 161, 162) ausgebildet ist oder einen Permanentmagneten (213, 218) umfasst.

14. Haltevorrichtung nach Anspruch 13, **dadurch gekennzeichnet, dass** das zweite magnetische Verbindungselement (205) zusätzlich ein ferromagnetisches oder ferrimagnetisches Element (214, 219) aufweist.

15. Haltevorrichtung nach einem der Ansprüche 10 bis 14, **dadurch gekennzeichnet, dass** die zweite Verbindungseinrichtung (43; 75; 107; 155) zwei zweite magnetische Verbindungselemente (51, 52; 85, 86; 131, 132; 161, 162) und/oder zwei zweite Steckelemente (53, 54; 88, 89) aufweist.

16. Gerätesystem (10; 60; 100; 140; 170) aufweisend:
■ ein Lasergerät (11; 61; 101; 141; 171) mit einem Gerätegehäuse (29; 63; 116; 143; 173), einer Messeinrichtung (19; 117; 144; 174) und einer ersten Verbindungseinrichtung (28; 64; 106; 145; 175, 201) und
■ eine Haltevorrichtung (12; 62; 102; 142; 172) zur Befestigung des Lasergerätes (11; 61; 101; 141; 171) an einem Halteelement (13; 103) mit einem Grundelement (41; 73; 102; 153; 176), einer Befestigungseinrichtung (42; 74; 109; 154; 177) zur Befestigung der Haltevorrichtung (12; 62; 102; 142; 172) am Halteelement (13; 103) und einer zweiten Verbindungseinrichtung (43; 75; 107; 155; 178, 202),
**dadurch gekennzeichnet, dass** die erste Verbindungseinrichtung (28; 64; 106; 145; 175, 201) ein erstes magnetisches Verbindungselement (45, 46; 81, 82; 127, 128; 156, 157; 191, 203) und ein erstes Steckelement (51, 52; 83, 84; 129; 158; 192, 204) aufweist und die zweite Verbindungseinrichtung (43; 75; 107; 155; 178, 202) ein zweites magnetisches Verbindungselement (47, 48; 85, 86; 131, 132; 161, 162; 193, 205) und ein zweites Steckelement (53, 54; 88, 89; 133; 163; 194, 206) aufweist, wobei im verbundenen Zustand das erste und zweite Steckelement (51, 52, 53, 54; 83, 84, 88, 89; 129, 133; 158, 163; 192, 194, 204, 206) eine Steckverbindung und das erste und zweite magnetische Verbindungselement (45, 46, 47, 48; 81, 82, 85, 86; 127, 128, 131, 132; 156, 157, 161, 162; 191, 193, 203, 205) eine Magnetverbindung bilden.

17. Gerätesystem nach Anspruch 16, **dadurch gekennzeichnet, dass** das Kraftmaximum der Magnetverbindung zwischen den magnetischen Verbindungselementen (45, 46, 47, 48; 81, 82, 85, 86; 127, 128, 131, 132; 156, 157, 161, 162; 191, 193, 203, 205) vorliegt, wenn die Steckverbindung zwischen den Steckelementen (51, 52, 53, 54; 83, 84, 88, 89; 129, 133; 158, 163; 192, 194, 204, 206) geschlossen ist.

18. Gerätesystem nach Anspruch 17, **dadurch gekennzeichnet, dass** die erste und zweite Verbindungseinrichtung (28, 43; 64, 75; 106, 107; 145, 155; 175, 178, 201, 202) bei geschlossener Steckverbindung eine erste Kontaktfläche (36; 72; 126; 147; 181) des Lasergerätes (11; 61; 101; 141; 171) mit einer zweiten Kontaktfläche (57, 58; 93; 112; 167; 197) der Haltevorrichtung (12; 62; 102; 142; 172) verbinden.
